# FASCICULE DE BREVET EUROPEEN

(11) **EP 0 761 573 B1**
(45) Date de publication et mention de la délivrance du brevet: **03.05.2000**
(21) Numéro de dépôt: 96440066.7
(22) Date de dépôt: 22.08.1996
(51) Int. Cl.: B65G 47/28, B65G 47/31, B65G 47/90, B65G 47/08, B65G 47/32

(54) **Dispositif permettant d'espacer des produits ou des lots de produits**
Vorrichtung zum Einstellen der Zwischenräume bei Transportgütern oder Gruppen von Gütern
Device for spacing products or groups of products

(30) Priorité: 22.08.1995 FR 9510071
(43) Date de publication de la demande: 12.03.1997
(73) Titulaire: A.P.I. SA, 10120 Saint Germain (FR)
(72) Inventeur: Flix, Jean-Marie, 10120 Saint-Germain (FR)
(74) Mandataire: Arbousse-Bastide, Jean-Claude Philippe

(56) Documents cités:
- EP-A- 0 272 897
- EP-A- 0 647 561
- DE-C- 3 709 046
- FR-A- 2 227 200

## Description

La présente invention a pour objet un dispositif permettant d'espacer des produits ou des lots de produits amenés par un convoyeur sur une ou plusieurs rangées, en donnant éventuellement auxdits produits une orientation bien déterminée, en vue de leur conditionnement.

On connaît déjà des dispositifs de séparation de produits transportés par un convoyeur en rangées, jointives ou non, en vue de leur conditionnement, constitués notamment de pièces cylindriques disposées parallèlement au sens d'arrivée desdits produits et dans chacune desquelles est pratiquée longitudinalement une gorge hélicoïdale de pas variable destinée à recevoir lesdits produits. Les pièces cylindriques sont entraînées en rotation autour de leur axe de manière à amener les produits d'une extrémité à l'autre, le pas variable créant un écart entre lesdits produits.

Cependant ces dispositifs ne peuvent former des lots qu'à partir d'une rangée d'unités ou de plusieurs rangées placées côte à côte avec un écart relativement important entre elles, et non des lots de produits groupés.

On connaît également, du document EP-A-0 647 561, un dispositif pour la formation de lots de produits comprenant entre autres une chaîne ou courroie de transfert munie de chariots comportant chacun un galet, aptes à se désolidariser de ladite chaîne alors que les galets s'engagent dans la gorge d'une vis à pas variable.

Toutefois, dans ce type de dispositif, si l'on désire modifier l'écartement entre les produits ou les lots de produits il faut changer la vis à pas variable, ce qui nécessite un arrêt temporaire de la production. De plus, il arrive que certains produits soient mal orientés avant leur espacement et soient conditionnés avec une mauvaise orientation.

La présente invention a pour objet de remédier à ces divers inconvénients des dispositifs connus en proposant un dispositif destiné à créer un espace facilement modulable entre des produits arrivant en rangées par convoyeur, ou entre des lots de produits, et à permettre en outre, éventuellement, de donner aux produits une orientation déterminée.

Le dispositif selon l'invention comprend des chariots dont chacun est apte à se déplacer sur un rail de guidage en courbe fermée et comporte des moyens de préhension des produits, unitairement ou par lots, et il se caractérise essentiellement en ce que chaque chariot comporte un moteur entraînant une pièce motrice qui tracte ledit chariot sur ledit rail de guidage, soit directement, soit par l'intermédiaire d'un support fixe ou mobile disposé parallèlement audit rail de guidage, les moyens de préhension et le moteur d'entraînement de la pièce motrice de chaque chariot étant commandés par un boîtier de commande électronique qui permet de déplacer ledit chariot de manière autonome par rapport aux autres chariots, en fonction de l'écartement que l'on désire obtenir entre deux chariots consécutifs et de l'orientation que l'on veut donner auxdits produits, lesdits moyens de préhension des produits étant articulés et commandés en mouvement de manière à permettre d'orienter et/ou déplacer lesdits produits dans une position déterminée.

Conformément à l'invention les moteurs et les moyens de préhension sont reliés au boîtier de commande soit par des câbles électriques soit par commande à distance, notamment par voie hertzienne, optique ou électromagnétique. Dans ce dernier cas le boîtier de commande est fixe, alors que dans le cas où des câbles électriques sont mis en oeuvre le boîtier de commande est mobile en rotation autour de son axe de manière à ne pas bloquer lesdits câbles électriques.

Toujours conformément à l'invention, le boîtier de commande renferme des moyens électroniques de contrôle comprenant une carte d'acquisition et de traitement des données et notamment des données représentatives de la position des chariots le long du support.

Dans un mode de réalisation avantageux du dispositif selon l'invention celui-ci comporte au moins une caméra électronique délivrant des signaux représentatifs des images formées sur son capteur d'images et dont le champ optique couvre l'espace d'arrivée des produits, lesdits signaux étant analysés par la carte d'acquisition des données de manière à détecter un éventuel défaut d'orientation d'un desdits produits et à commander le moyen de préhension du chariot qui prend en charge ledit produit pour lui donner une orientation correcte.

Conformément à l'invention lorsque le support d'entraînement des chariots est fixe, il est constitué d'une crémaillère sur laquelle est engrenée la pièce motrice, qui peut être une simple roue dentée ou un pignon.

Lorsque le support d'entraînement est mobile, il est constitué d'une chaîne ou d'une courroie crantée tendue entre deux roues d'entraînement d'axes verticaux, et la pièce motrice est un pignon d'entraînement d'axe vertical.

Les avantages et les caractéristiques de la présente invention ressortiront plus clairement de la description qui suit et qui se rapporte au dessin annexé, lequel en représente deux modes de réalisation non limitatifs.

Dans le dessin annexé :
- La figure 1 représente une vue en perspective du dispositif selon l'invention selon un premier mode de réalisation.
- La figure 2 représente une vue de détail en perspective du dispositif selon l'invention selon un deuxième mode de réalisation.

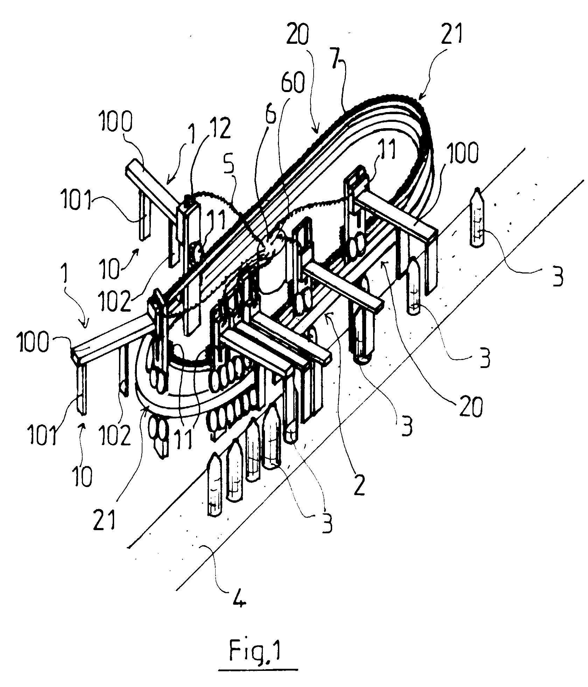

Si on se réfère à la figure 1 on peut voir que le dispositif selon l'invention comprend des chariots 1 guidés en déplacement par un rail de guidage 2 comportant deux parties rectilignes 20 parallèles entre elles et reliées par deux parties arrondies 21, ledit rail étant disposé à l'arrivée de produits 3 amenés par un convoyeur 4, les deux parties rectiligne 20 étant parallèles au convoyeur 4.

Les chariots 1 sont équipés chacun d'une part d'un moyen de préhension 10 des produits 3 et d'autre part d'un pignon d'entraînement 11 engréné sur une crémaillère 7 et mû par un moteur 12. Le moyen de préhension 10 des produits 3 comprenant une tige horizontale 100 mobile en translation verticale, articulée à son extrémité de solidarisation au chariot 1 de manière à pouvoir pivoter autour de son axe dans un plan horizontal et dans un plan vertical. La tige 100 supporte deux bras verticaux 101 et 102 réglables en écartement de façon à saisir un produit 3. Les moyens de préhension 10 et les moteurs 12 entraînant les pignons 11 sont commandés par un boîtier de commande 6, disposé sous le rail de guidage 2 et mobile en rotation autour de son axe 60, renfermant une carte d'acquisition et de traitement des données représentatives de la position des chariots sur la crémaillère 7 ou le rail de guidage 2. La carte peut comprendre par exemple un microprocesseur, des mémoires et des circuits d'entrée/sortie connectés à des câbles électriques 5 reliant les moyens de préhension 10 et les moteurs d'entraînement 12 des pignons 11.

Le fonctionnement du dispositif selon ce mode de réalisation est le suivant : la gestion du déplacement des chariots 1 à partir de la carte d'acquisition et de traitement du boîtier 6 consiste à ralentir lesdits chariots 1 approchant de l'arrivée des produits 3 de manière à leur donner une vitesse sensiblement égale à celle des produits 3 et, lorsque cette vitesse est atteinte, à commander, par le boitier 6, la descente de la tige 100 du moyen de préhension 10 et l'enserrement d'un produit 3 par les deux bras verticaux 101 et 102, puis, une fois le produit 3 saisi, à le soulever en commandant la remontée de la tige 3 et à accélérer le chariot 1 pour le mettre par exemple au pas d'une chaîne à godet, non représentée sur la figure et qui se trouverait en parallèle du convoyeur 4. L'espace entre les produits 3 est déterminé par les composantes de l'accélération et de la vitesse communiquées aux chariots 1.

En outre on peut disposer avantageusement une caméra électronique de contrôle de l'orientation des produits 3 à l'arrivée desdits produits sur le convoyeur 4, avec un éclairage approprié. Les signaux émis par la caméra sont alors interprétés par la carte électronique du boîtier 6 qui, dans le cas où l'interprétation des signaux conduit à la détection d'une mauvaise orientation d'un produit 3, et après la saisie de ce produit 3 par un chariot 1, commandent en mouvement la tige 100 du moyen de préhension 10 de manière à lui donner la bonne orientation.

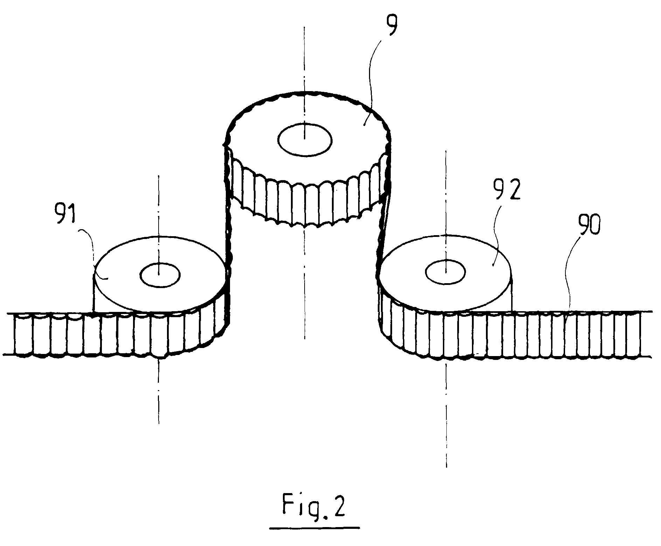

Si on se réfère à la figure 2 on peut voir que dans un autre mode de réalisation le chariot 1 comporte un pignon moteur 9 denté s'engrénant sur une courroie crantée 90 tendue sur celui-ci au moyen de deux pignons de déviation 91 et 92 disposés de part et d'autre dudit pignon moteur 9.

Les chariots 1 ont donc une vitesse absolue égale à leur vitesse relative par rapport à la courroie atteinte grâce à leur propre motorisation plus la vitesse de la courroie, en sorte qu'il est nécessaire de faire tourner leurs moteurs en sens inverse pour freiner les chariots en vue de la saisie des produits 3, la phase d'accélération amenant les chariots 3 à la vitesse de la courroie 9 si bien qu'il n'est alors plus nécessaire de commander le fonctionnement de leur moteur sauf à vouloir modifier l'espacement entre le chariot concerné et celui qui le précède.

## Revendications

1. Dispositif permettant d'espacer des produits (3) ou des lots de produits (3) amenés par un convoyeur (4) sur une ou plusieurs rangées, en donnant éventuellement auxdits produits une orientation déterminée, en vue de leur conditionnement, comprenant des chariots (1) dont chacun est apte à se déplacer sur un rail de guidage (2) en courbe fermée et comporte des moyens de préhension (10) des produits (3), unitairement ou par lots, caractérisé en ce que chaque chariot (1) comporte un moteur (12) entraînant une pièce motrice (11, 9) qui tracte ledit chariot (1) sur ledit rail de guidage (2), soit directement, soit par l'intermédiaire d'un support fixe (7) ou mobile (90) disposé parallèlement audit rail de guidage (2), les moyens de préhension (10) et le moteur d'entraînement (12) de la pièce motrice (11, 9) de chaque chariot étant commandés par un boîtier de commande électronique (6) qui permet de déplacer ledit chariot (1) de manière autonome par rapport aux autres chariots en fonction de l'écartement que l'on désire obtenir entre deux chariots consécutifs (1) et de l'orientation que l'on veut donner auxdits produits (3), lesdits moyens de préhension (10) des produits (3) étant articulés et commandés en mouvement de manière à permettre d'orienter et/ou déplacer lesdits produits (3) dans une position déterminée.

2. Dispositif selon la revendication 1 caractérisé en ce que les moyens de préhension (10) comprennent une tige (100) mobile en translation verticale et articulée à son extrémité de solidarisation au chariot (1) de manière à pouvoir pivoter autour de son axe et dans un plan horizontal et vertical, ladite tige (100) supportant deux bras verticaux (101) et (102) réglables en écartement.

3. Dispositif selon la revendication 2 caractérisé en ce que les bras verticaux (101) et (102) disposent d'une articulation centrale (103).

4. Dispositif selon l'une quelconque des revendications précédentes caractérisé en ce que les moteurs (12) et les moyens de préhension (10) sont reliés au boîtier de commande (6) soit par des câbles électriques (5) soit par commande à distance notamment par voie hertzienne, optique ou électromagnétique.

5. Dispositif selon l'une quelconque des revendications précédentes caractérisé en ce que le boîter (6) renferme des moyens électroniques de contrôle comprenant une carte d'acquisition et de traitement des données et notamment des données représentatives de la position des chariots (3) le long du support d'entraînement (7,90).

6. Dispositif selon la revendication 5 caractérisé en ce qu'il comporte au moins une caméra électronique délivrant des signaux représentatifs des images formées sur son capteur d'images et dont le champ optique couvre l'espace d'arrivée des produits, lesdits signaux étant analysés par la carte d'acquisition des données de manière à détecter un éventuel défaut d'orientation d'un desdits produits et à commander le moyen de préhension du chariot qui prend en charge ledit produit pour lui donner une orientation correcte.

7. Dispositif selon l'une quelconque des revendications précédentes caractérisé en ce que le support fixe (7) est constitué d'une crémaillère sur laquelle est engrenée la pièce motrice (11).

8. Dispositif selon l'une quelconque des revendications 1 à 6 caractérisé en ce que le support mobile est constitué d'une chaîne ou d'une courroie crantée (90) tendue entre deux roues d'entraînement (91, 92) d'axes verticaux, et la pièce motrice est un pignon d'entraînement (9) d'axe vertical.

## Patentansprüche

1. Vorrichtung zum Einstellen von Zwischenräumen zwischen durch ein Förderband (4) auf einer oder mehreren Reihen herangebrachten Gütern (3) oder Gruppen von Gütern (3) dadurch zu schaffen, daß den besagten Gütern im Hinblick auf ihre Verpackung eine eventuelle bestimmte Ausrichtung gegeben wird, und die Schlitten umfaßt (1), von denen jeder dazu geeignet ist, sich auf einer Führungsschiene (2) in geschlossener Kurve fortzubewegen und Greifmittel (10) für die Güter (3) einzeln oder per Lots umfaßt, dadurch gekennzeichnet, daß jeder Schlitten (1) einen Motor (12) umfaßt, der einen Antriebsteil (11, 9) mitführt, das den besagten Schlitten (1) auf der besagten Führungsschiene (2) entweder direkt oder indirekt, d. h. mittels einen parallel zu besagter Führungsschiene angebrachten festen (7) oder mobilen (90) Unterbau zieht, wobei die Greifmittel (10) und der Antriebsmotor (12) des Antriebsteils (11, 9) jedes Schlittens durch ein elektronisches Steuergehäuse (6) gesteuert werden, daß es erlaubt, den besagten Schlitten (1) auf autonome Weise gegenüber den anderen Schlitten im Hinblick auf den Abstand, den man zwischen zwei aufeinander folgenden Schlitten (1) erreichen möchte und der Ausrichtung, die man den anderen Gütern (3) geben möchte, zu versetzen, wobei die besagten Greifmittel (10) der Güter (3) artikuliert und in der Bewegung derart gesteuert sind, daß die Ausrichtung und / oder die Versetzung der besagten Güter (3) in einer bestimmten Position ermöglicht wird.

2. Vorrichtung gemäß Anspruch 1, dadurch gekennzeichnet, daß die Greifmittel (10) einen mobilen und an seinem Ende der Befestigung mit dem Schlitten (1) artikulierten Stift (100) in vertikaler Verschiebung derart umfassen, daß er um seine Achse und in horizontaler und vertikaler Ebene schwenken kann, wobei der besagte Stift (100) zwei vertikale (101) und im Zwischenraum einstellbare (102) Arme umfaßt.

3. Vorrichtung gemäß Anspruch 2, dadurch gekennzeichnet, daß die vertikalen (101) und im Zwischenraum einstellbaren (102) Arme über eine zentrale (103) Artikulation verfügen.

4. Vorrichtung gemäß einem der vorherigen Ansprüche, dadurch gekennzeichnet, daß die Motoren (12) und die Greifmittel (10) mit dem Steuergehäuse (6) entweder durch elektrische Kabel (5) oder durch Fernsteuerung verbunden sind, insbesondere auf dem Funkweg, per Lichtwellenleiter oder elektromagnetischer Leitung.

5. Vorrichtung gemäß einem der vorherigen Ansprüche, dadurch gekennzeichnet, daß das Gehäuse (6) elektronische Kontrollmittel beinhaltet, die eine Karte zur Erfassung und Verarbeitung der Daten und insbesondere der die Position der Schlitten (3) entlang des Antriebsunterbaus (7, 90) darstellenden Daten umfaßt.

6. Vorrichtung gemäß Anspruch 5, dadurch gekennzeichnet, daß er wenigstens eine elektronische Kamera umfaßt, die die auf ihrem Bilderempfänger gebildeten Bilder darstellende Signale liefert und deren Gesichtsfeld den Ankunftsbereich der Güter abdeckt, wobei die besagten Signale derart von der Datenerfassungskarte analysiert werden, daß ein eventueller Ausrichtungsfehler einer der besagten Güter entdeckt wird und daß das Greifmittel des Schlittens, das das besagte Gut aufnimmt, gesteuert wird, um ihm eine korrekte Ausrichtung zu geben.

7. Vorrichtung gemäß einem der vorherigen Ansprüche, dadurch gekennzeichnet, daß der feste (7) Unterbau aus einer Zahnstange besteht, auf der das Antriebsteil (11) eingerückt ist.

8. Vorrichtung gemäß einem der Ansprüche 1 bis 6, dadurch gekennzeichnet, daß der mobile Unterbau aus einer Kette oder einem formgezahnten (90) Zugkraftorgan besteht, das zwischen zwei Antriebsrädern (91, 92) mit vertikalen Achsen gespannt ist, und das Antriebsteil ein Antriebszahnrad (9) mit vertikaler Achse ist.

## Claims

1. Device for spacing products (3) or batches of products (4) driven by a conveyor on one or several rows by subsequently giving said products a definite direction so as to have them packed, comprising trolleys (1) each of which being able to move on a guide rail (2) in closed curve and comprising means (10) for gripping the products (3), per unit or batches, characterised in that each trolley (1) comprises a motor (12) driving a driving element (11, 9) which tractor-draws said trolley (1) on said guide rail (2), either directly or by means or by means of a fixed support (7) or a mobile support (90) placed in parallel to the guide rail (2), the gripping means (10) and the drive motor (12) of the driving element (11, 9) of each trolley being controlled by an electronic control box (6) which enables said trolley (1) to move in an autonomous way with respect to the other trolleys the spacing it is desired to obtain between the consecutive trolleys (1) and the direction it is desired to give to said products (3), said means 10) for gripping the products (3) being joined and movement-controlled so as to make it possible to direct and/or move said products in a definite direction.

2. Device according to claim 1 characterised in that said gripping means comprise a vertical translation-mobile rod (100) and jointed at its extremity to be rendered integral to the carriage (1) so as to pivot around its axis and in a horizontal and vertical plan, said rod (100) supporting two vertical arms (101) and able to be spaced-adjusted.

3. Device according to claim 2 characterised in that the vertical arms (101) and (102) have a central link (103).

4. Device according to one of the preceding claims characterised in that the motors (12) and the gripping means (10) are connected to the control box (6), either by electric cables (5) or by remote control in particular via a radio, optical and electromagnetic channel.

5. Device according to one of the preceding claims characterised in that the box (6) contains control electric means comprising for acquiring and processing data and in particular data representing the position of the carriages (3) along the driving supports (7,90).

6. Device according to claim 5 characterised in that it comprises at least one electronic camera delivering signals representing the images formed on its image sensor and whose optical held covers the incoming space of the products, said signals being analysed by the data acquisition card so as to detect a possible misdirection of one of said products and control the gripping means of the carriage taking charge of said product so as to give it an accurate direction.

7. Device according to one of the preceding claims, characterised in that the fixed support (7) is formed of a rack on which the driving element (11) is geared.

8. Device according to one of the claims 1 to 6, characterised in that the mobile support is constituted by a chain or a synchronous belt (90) taut between two drive wheels (91, 92) with vertical axes, and the drive element is a driving pinion (9) with a vertical
